# EUROPEAN PATENT SPECIFICATION

(11) **EP 4 080 327 B1**
(45) Date of publication and mention of the grant of the patent: **14.08.2024**
(21) Application number: 21169667.9
(22) Date of filing: 21.04.2021
(51) Int. Cl.: G06F 3/01, G06F 3/16

(54) **METHOD INVOLVING VIRTUAL ASSISTANT**
VERFAHREN MIT VIRTUELLEM ASSISTENTEN
PROCÉDÉ IMPLIQUANT UN ASSISTANT VIRTUEL

(43) Date of publication of application: 26.10.2022
(73) Proprietor: Salient World AS, 0506 Oslo (NO)
(72) Inventor: Sah, Sumit, 0666 Oslo (NO)
(74) Representative: AWA Sweden AB

(56) References cited:
- WO-A1-2014/189486
- US-A1- 2019 311 718

## Description

### Technical field

The present invention relates to a computer-implemented method involving a virtual assistant. The present invention also relates to a corresponding computer program product and device.

### Background

Virtual assistants are driven by artificial intelligence programs that can understand natural language and complete tasks for a user based on spoken words alone. The tasks could include search for information, set alerts, schedule an event, order a taxi, etc.

Some virtual assistants display a digital avatar that may look like a real human replication. These virtual assistants could be embodied conversational agents capable of engaging in conversation with a user employing voice, gesture, facial expression, and so forth.

Other virtual assistants, such as Siri (Apple), Amazon's Alexa, and Google Assistant, do not come with any visual embodied representation.

WO2014189486 A1 discloses a method for interaction with a virtual personal assistant on a computing device. The method in WO2014189486 A1 i.a. comprises: determining an engagement level of a user while the avatar is in a ready state; displaying on the computing device the avatar in an engaged state in response to the user having an engagement level greater than a threshold level; and displaying the avatar in an disengaged state in response to the user having an engagement level less than the threshold level. When in the disengaged state, the avatar is displayed in a manner that indicates that the virtual personal assistant is idle and/or not actively listening to instructions. The avatar may be displayed in the disengaged state as semitransparent or the computing device may render the avatar in the disengaged state as completely invisible. The user may indicate activation of the virtual personal assistant by focusing on the position of the avatar currently displayed in the disengaged state. Furthermore, the computing device may interpret an audio input to determine whether the user has uttered a code word for activating the virtual personal assistant, such as the name virtual personal assistant or "assistant" or "computer".

In EP3187976 A2, information displayed on a display may be in the form of an avatar. According to EP3187976 A2, a user's gaze may be determined and once recognized by a portable device that a user's gaze is directed towards or near a displayed avatar, the avatar may respond in some fashion. In this manner, a user may interact with a portable device using their voice only when they intend. Without gaze being determined to be towards or near the avatar, the portable device in EP3187976 A2 will not analyze the user's voice for spoken commands. However, certain commands may still be spoken towards the portable device without the user's gaze direction being detected towards the display. For example, a spoken command such as "where are you?" may still cause the portable device in EP3187976 A2 to respond.

US2019311718A1 discloses a voice-interaction device which includes a plurality of input and output components configured to facilitate interaction between the voice-interaction device and a target user. The plurality of input and output components may include a microphone configured to sense sound and generate an audio input signal, a speaker configured to output an audio signal to the target user, and an input component configured to sense at least one non-audible interaction from the target user. A context controller monitors the plurality of input and output components and determines a current use context. A virtual assistant module facilitates voice communications between the voice-interaction device and the target user and configures one or more of the input and output components in response to the current use context. The current use context may include whisper detection, target user proximity, gaze direction tracking and other use contexts. The voice-interaction device further comprises a display configured to present visual display elements to the target user, wherein the context controller is further configured to analyse digital images captured by a camera of the voice-interaction device to determine a gaze direction of the target user. The virtual assistant module is further configured to direct interactions to the target user through the visual display elements on the display in response to the gaze direction being directed toward the display, and direct interactions through the audio output signal and the speaker in response to the gaze direction being directed away from the display.

### Summary of the invention

Notwithstanding the solutions presented above, it is an object of the present invention to provide an improved method involving a virtual assistant.

According to a first aspect of the present invention, this and other objects are achieved by a computer-implemented method as set out in claim 1.

The present invention is based on the understanding that by enabling a voice-only virtual assistant in response to determining that the user is not looking at the window of the computer program, full virtual assistance by voice (but not gesture/facial expression) can still be provided even if the digital avatar is not displayed. Furthermore, processing power and/or bandwidth may be saved because the method does not display the digital avatar and does therefore not have to calculate gestures and facial expressions when the user is not looking at the computer program's window, yet full (voice-based) virtual assistance can be provided. Having the voice-only virtual assistant and no displayed digital avatar is here not detrimental to the user experience, since the user is anyways not looking at the computer program's window that otherwise displays the digital avatar.

In the context of the present invention, the computer program's window can cover the complete screen of the device ('full screen mode') or cover just a portion of the screen of the device. In the former case, the present method basically detects whether or not the user is looking at the screen of the device, and in response thereto displays the digital avatar or enables the voice-only virtual assistant. In the latter case, the method may enable the voice-only virtual assistant (and not display the digital avatar) if the user looks at another portion of the screen outside the computer program's window.

Furthermore, the digital avatar and voice-only virtual assistant may be integrated or embedded within the computer program, as opposed to a virtual assistant integrated into a device or an operating system. The computer program may here for example be an app. The computer program/app may be stored on the device.

The method may comprise switching from the displayed digital avatar to the voice-only virtual assistant when determining that the user looks away from the computer program's window. The method may also comprise switching from the voice-only virtual assistant to the digital avatar when determining that the user looks to the computer program's window. The method may continuously monitor whether or not the user is looking at the computer program's window, and switch between the displayed digital avatar and the voice-only virtual assistant if a change of state (user is looking at the computer program's window or user is not looking at the computer program's window) is detected.

The method also switches from the displayed digital avatar to the voice-only virtual assistant if a user minimizes the computer program's window or if the device goes into a lock screen.

Switching between the displayed digital avatar and the voice-only virtual assistant in response to the user looking to the computer program's window or away from the computer program's window may be subject to a predetermined delay. In this way, the method will not switch from the displayed digital avatar to the voice-only virtual assistant if the user only very briefly looks away from the computer program's window, which in turn may avoid flicker on the screen. The predetermined delay may for example be in the range of 0.5-2 seconds, for example 1s.

The method allows seamless voice-based user interaction when switching between the displayed digital avatar and the voice-only virtual assistant. For example, the user can have a conversation with the digital avatar that continues uninterrupted with the voice-only virtual assistant, even if the user during the conversation looks away so that the digital avatar no longer is displayed. In this way, the user experience is improved while at the same time processing power and/or bandwidth may be saved since the digital avatar is not displayed when the user looks away.

The voice-only virtual assistant accepts the same user inputs as the displayed digital avatar. Hence, the voice-only virtual assistant is not limited to just certain commands or a code word for activating a virtual personal assistant, but can respond or react to the same questions and commands from the user as the displayed digital avatar.

The digital avatar is a digital avatar of a virtual assistant, wherein the voice-only virtual assistant is a voice-only virtual assistant mode of that virtual assistant. That is, the digital avatar and the voice-only virtual assistant (mode) may use the same underlying virtual assistant or virtual assistant engine. In other words, the present virtual assistant may be polymorphic: with displayed digital avatar and with voice-only (without displaying the digital avatar). The underlying virtual assistant or virtual assistant engine, i.e. the software algorithm of the virtual assistant, may run locally on the device or it may run on a remote server that the present computer program can communicate with via a communications network, such as 5G or Wi-Fi.

The digital avatar may be a humanoid digital avatar. The displayed digital avatar may for example resemble a human face.

The digital avatar may be a graphical representation of an embodied conversational agent. The embodied conversational agent may be capable of engaging in conversation with the user employing the same verbal (voice/speech) and nonverbal means (such as gesture, facial expression, etc.) that humans do.

The at least one sensor may be a front camera of the device. The front camera (or front-facing camera) is intended to face the user of the device. A front camera is conveniently often already present in devices like mobile phones. However, other types of sensors could be used as well, for example at least one IR-based sensor. Also, the at least one sensor (e.g. a camera) could alternatively be separate from, but wiredly or wirelessly connected to, the device.

The device may be selected from the (non-exhaustive) group comprising: a mobile device, a mobile phone, a smartphone, a tablet, a computer, a smartwatch, a smart display, a smart home control device, a household appliance, and a user interaction enabled device in a vehicle.

According to a second aspect of the present invention, there is provided a computer program product comprising computer program code to perform, when executed on a computer, the method according to the first aspect. The computer program product may be a non-transitory computer program product. The computer program product may be the aforementioned computer program, for example be an app. The computer may be the aforementioned device, for example a mobile device such as a mobile phone or smartphone.

According to a third aspect of the present invention, there is provided computer-readable storage medium comprising the computer program product according to the second aspect.

According to a fourth aspect of the present invention, there is provided an electrical signal embodied on a carrier wave and propagated on an electrical medium, the electrical signal comprising the computer program product according to the second aspect.

According to a fifth aspect of the present invention, there is provided a device as set out in claim 11.

### Brief description of the drawings

These and other aspects of the present invention will now be described in more detail, with reference to the appended drawings showing currently preferred embodiments of the invention.
Fig. 1 is a front view of a device according to an aspect of the present invention.
Fig. 2 is a flowchart of a method according to one or more embodiments of the present invention.
Fig. 3 illustrates a user interacting with a displayed digital avatar.
Fig. 4 illustrates the user interacting with a voice-only virtual assistant.

### Detailed description of the invention

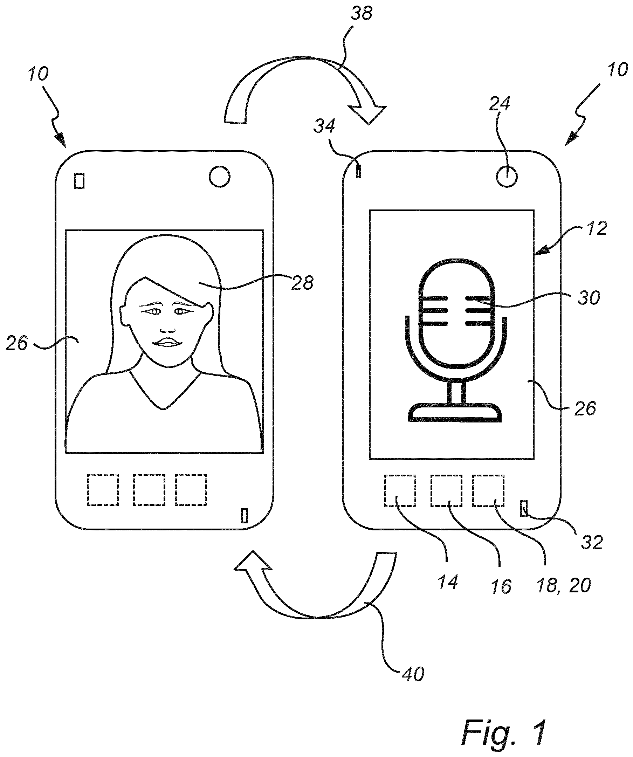

Fig. 1 illustrates a device 10 according to an aspect of the present invention. The device 10 is here a smartphone, like an iPhone or an Android phone.

The device 10 comprises an electronic display with a screen 12. The device 10 may also comprise a processor 14, a memory 16, and a storage 18.

The device 10 may be configured to perform various specific steps or actions detailed in the following by means of a computer program (product) 20, for example an app. The computer program 20 may be downloaded to the device 10 and stored on the aforementioned storage 18. The computer program 20 may run or be executed on the device 10 using the aforementioned processor 14 and memory 16.

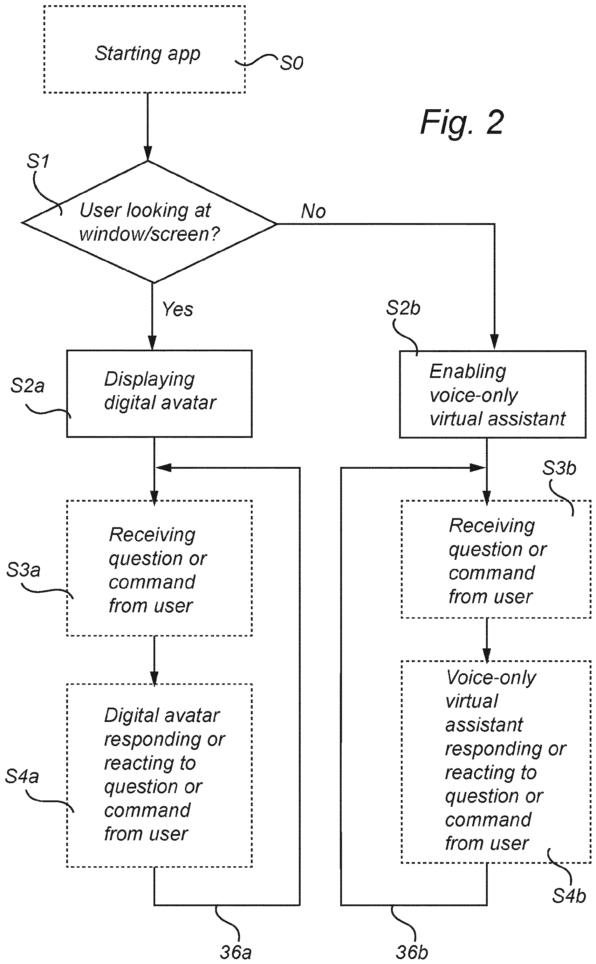

Turning to fig. 2, fig. 2 is a flowchart of a (computer-implemented) method according to one or more embodiments of the present invention.

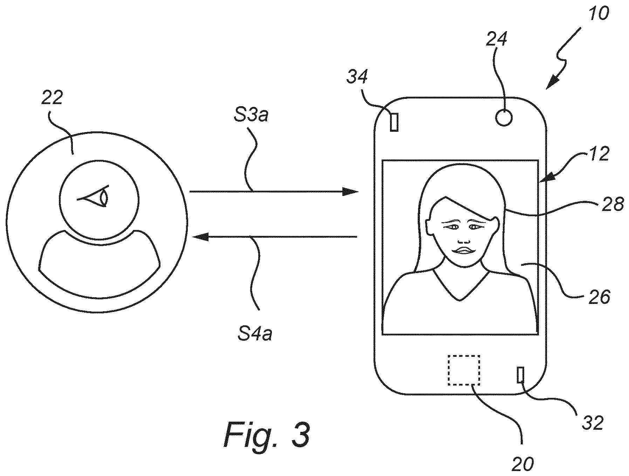

At S0, the method may include starting the computer program 20 on the device 10. The computer program 20 may for example be started when a user 22 (see figures 3-4) clicks on an icon of the computer program 20, which icon may be displayed on the screen 12.

At S1, the method includes determining, using at least one sensor 24, whether or not the user 22 is looking at a window 26 of the computer program 20, which window 26 is displayed on the screen 12. The herein illustrated window 26 covers the complete screen 12 ('full screen mode'), but could alternatively cover just a portion of the screen 12. The at least one sensor used to determine whether or not the user 22 is looking at the window 26/screen 12 may for example be a front camera (or front-facing camera) 24 of the device 10. The computer program 20 may have access to the at least one sensor 24 and in real time use data from the at least one sensor 24 to determine if the user 22 is looking at window 26 on the screen 12 of the device 10. The at least one sensor 24 and/or computer program 20 may be capable of tracking the eye gaze of the user 22 to determine the position of the user's gaze on the screen 12.

In response to determining in S1 that the user 22 is looking at the window 26, the method displays (at S2a) in the window 26 a digital avatar 28, see fig. 1 (left) and fig. 3. The digital avatar 28 is capable of interacting with the user 22 with voice combined with at least one of gesture and facial expression. As illustrated, the displayed digital avatar 28 may be a humanoid digital avatar resembling a human face.

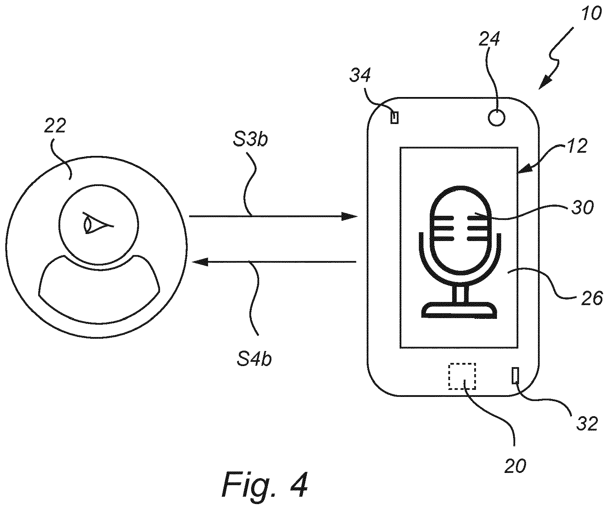

On the other hand, in response to determining in the user 22 (or any other user) is not looking at the window 26, the method enables (at S2b) a voice-only virtual assistant illustrated by 30, without displaying the digital avatar in the window 26, see fig. 1 (right) and fig. 4. The voice-only virtual assistant 30 is capable of interacting with the user 22 with voice, but not gestures, facial expressions, etc.

By enabling the voice-only virtual assistant 30 in response to determining that the user 22 is not looking at the window 26 on the screen 12, full virtual assistance - albeit by voice only - can still be provided even when the digital avatar 28 is not displayed. Furthermore, processing power and/or bandwidth may be saved because the method does not display the digital avatar 28, and does therefore not have to calculate gestures and facial expressions, when the user 22 is not looking at the window 26. Having the voice-only virtual assistant 30 and not the digital avatar 28 is in step S2b not detrimental to the user experience, since the user 22 is anyways not looking at the window 26 on the screen 12.

Following step S2a, the method may further comprise receiving (at S3a) a spoken input from the user 22, typically a question or a command, via at least one microphone 32 of the device 10. In other words, the user 22 interacts with the digital avatar 28 displayed on the screen 12 with voice which is captured by the computer program 20 using the microphone(s) 32. The user 22 may for example ask "what is the weather forecast for tomorrow?".

In some embodiments, the user input to the digital avatar 28 could also include face gestures and/or body gestures of the user 22, as captured e.g. by the front camera 24.

At S4a, the method may further comprise the digital avatar 28 responding or reacting to the input from the user 22, with voice (via at least one loudspeaker 34 of the device 10) combined with gestures and/or facial expressions. In other words, in step S4a the digital avatar 28 displayed in the window 26 of the computer program 20 interacts back with the user 22. The gestures and/or facial expressions may include one or more of movement of the face of the displayed digital avatar 28, movement of facial muscles of the displayed digital avatar 28, and movement of lips of the displayed digital avatar 28. In response to the above question from the user 22, the digital avatar 28 may respond by voice "The weather forecast for tomorrow is sunny weather with a temperature of 22°C" and at the same time articulate the spoken words with corresponding lip movement (and optionally also look happy, because of the nice weather).

In some embodiments, the digital avatar 28 could also (in real time) read or interpret sentiments and/or emotions of the user 22 based on the aforementioned face gestures and/or body gestures of the user 22 as captured by the front camera 24. Based on the read or interpreted sentiments and/or emotions of the user 22, the digital avatar 28 may response with appropriate facial gestures and speech. For example, if the user 22 looks sad, the digital avatar 28 could look compassionate and/or give an encouraging voiced reply. In another example, if the user 22 looks upset or angry, the digital avatar 28 could voice a calming reply, and so on.

Following S4a, the method can loop back and wait for another input from the user 22, as illustrated by 36a.

Following step S2b, the method may further comprise receiving (at S3b) a spoken input from the user 22, typically a question or a command, via the microphone(s) 32. In other words, the user 22 interacts with the voice-only virtual assistant 30 of the computer program 20 with voice via the microphone(s) 32. Similar to S2a, the user 22 could here ask "what is the weather forecast for the day after tomorrow?.

At S4b, the method may further comprise the voice-only virtual assistant 30 responding or reacting to the input from the user 22, with speech voice via the loudspeaker(s) 34. In other words, in step S4b the voice-only virtual assistant 30 interacts back with the user 22. The tone of the voice of the voice-only virtual assistant 30 could reflect a positive or negative response. In response to the above question from the user 22, the digital voice-only virtual assistant 30 may respond by voice "The weather forecast for the day after tomorrow is rainy weather with a temperature of 5°C and a strong wind from SW" (and optionally also sound gloomy, because of the poor weather).

Following S4b, the method can loop back and wait for another input from the user 22, as illustrated by 36b.

The voice-only virtual assistant 30 accepts the same user inputs (e.g. questions and/or commands) as the displayed digital avatar 28. The digital avatar 28 may for example be the digital avatar of a virtual assistant of the computer program 20, wherein the voice-only virtual assistant 30 is a voice-only virtual assistant mode of the same virtual assistant. The questions and/or commands that the user 22 can ask and that the digital avatar 28 and the voice-only virtual assistant 30 can respond and/or react to may include, but are not limited to: search for information (e.g. weather, stock prices, tv scheduling, product information, cooking recipes, and so on), set alerts, set timers, schedule an event, place orders (e.g. for food, a taxi, a product, a service, and so on), get directions for navigation, etc.

Moving on, the present method may comprise switching from the displayed digital avatar 28 to the voice-only virtual assistant 30 (without displaying the digital avatar 28) when determining that the user 22 looks away from the window 26 of the computer program 20, as illustrated by arrow 38 in fig. 1. Likewise, the method may also comprise switching from the voice-only virtual assistant 30 (without displaying the digital avatar 28) to displaying the digital avatar 28 when determining that the user looks 30 to the window 26 of the computer program 20, as illustrated by arrow 40 in fig. 1. The method/computer program 20 may continuously monitor whether or not the user 22 is looking at the computer program's window 26, and switch between the displayed digital avatar 28 and the voice-only virtual assistant 30 if a change of state (i.e. user 22 is looking at window 26 or user 22 is not looking at window 26) is detected.

Switching between the displayed digital avatar 28 and the voice-only virtual assistant 30 in response to the user 22 looking to or away from the window 26 of the computer program 20 may be subject to a predetermined delay. For example, if the user 22 only briefly looks away from the window 26 for a duration not exceeding the predetermined delay, the method/computer program 20 may keep displaying the digital avatar 28 without switching to the voice-only virtual assistant 30. The predetermined delay may example be in the range of 0.5-2 seconds, for example 1s.

Furthermore, the method/computer program 20 allows seamless voice-based user interaction when switching between the displayed digital avatar 28 and the voice-only virtual assistant 30. For example, the user 22 can have a conversation back and forth with the digital avatar 28, which conversation continues uninterrupted with the voice-only virtual assistant 30 even if the user 22 during the conversation looks away so that the digital avatar 28 no longer is displayed on the screen 12. In other words, the conversation is handed over from the displayed digital avatar 28 to the voice-only virtual assistant 30 without interruption. In the context of fig. 2, the method could here jump from step S3a (via S1 and S2b) to S4b. Likewise, the method could jump from step S3b (via S1 and S2a) to S4a if the user 22 turns to the display 12 after asking a question to the voice-only virtual assistant 30. That is, a conversation may be handed over from the voice-only virtual assistant 30 to the displayed digital avatar 28 without interruption.

The person skilled in the art realizes that the present invention by no means is limited to the embodiments described above. On the contrary, many modifications and variations are possible within the scope of the appended claims.

## Claims

1. A computer-implemented method, comprising:
determining, using at least one sensor (24), whether or not a user (22) is looking at a computer program's window (26) on a screen (12) of a device (10);
in response to determining that the user is looking at the computer program's window on the screen, displaying in the computer program's window on the screen a digital avatar (28) capable of interacting with the user with voice combined with at least one of gesture and facial expression, wherein the digital avatar is a digital avatar of a virtual assistant;
and
in response to determining that the user is not looking at the computer program's window on the screen, enabling a voice-only virtual assistant (30) of the computer program (20) without displaying the digital avatar, wherein the voice-only virtual assistant is a voice-only virtual assistant mode of said virtual assistant, and wherein the voice-only virtual assistant (30) is capable of interacting with the user (22) with voice but not gestures or facial expressions,
wherein the method allows seamless voice-based user interaction when switching between the displayed digital avatar and the voice-only virtual assistant, the voice-only virtual assistant accepting the same user inputs as the displayed digital avatar, and wherein the method also switches from the displayed digital avatar to the voice-only virtual assistant if the user minimizes the computer program's window or if the device goes into a lock screen.

2. A computer-implemented method according to claim 1, further comprising:
switching from the displayed digital avatar to the voice-only virtual assistant when determining that the user looks away from the computer program's window.

3. A computer-implemented method according to claim 1 or 2, further comprising:
switching from the voice-only virtual assistant to the digital avatar when determining that the user looks to the computer program's window.

4. A computer-implemented method according to claim 3, wherein switching between the displayed digital avatar and the voice-only virtual assistant in response to the user looking to the computer program's window or away from the computer program's window is subject to a predetermined delay.

5. A computer-implemented method according to any one of the preceding claims, wherein the digital avatar is a humanoid digital avatar.

6. A computer-implemented method according to any one of the preceding claims, wherein the at least one sensor is a front camera (24) of the device.

7. A computer-implemented method according to any one of the preceding claims, wherein said device is selected from a group comprising:
a mobile device, a mobile phone, a smartphone, a tablet, a computer, a smartwatch, a smart display, a smart home control device, a household appliance, and a user interaction enabled device in a vehicle.

8. A computer program product (20) comprising computer program code to perform, when executed on a computer (10), the method according to any one of the preceding claims.

9. A computer-readable storage medium comprising the computer program product according to claim 8.

10. An electrical signal embodied on a carrier wave and propagated on an electrical medium, the electrical signal comprising the computer program product according to claim 8.

11. A device (10), comprising at least one sensor (24) and an electronic display with a screen (12), wherein the device is configured to:
determine, using the at least one sensor, whether a user (22) is looking at a computer program's window (26) displayed on the screen;
in response to determining that the user is looking at the computer program's window on the screen, display in the computer program's window on the screen a digital avatar (28) capable of interacting with the user with voice combined with at least one of gesture and facial expression, wherein the digital avatar is a digital avatar of a virtual assistant; and
in response to determining that the user is not looking at the computer program's window on the screen, enable a voice-only virtual assistant (30) without displaying the digital avatar, wherein the voice-only virtual assistant is a voice-only virtual assistant mode of said virtual assistant, and wherein the voice-only virtual assistant (30) is capable of interacting with the user (22) with voice but not gestures or facial expressions,
wherein the device allows seamless voice-based user interaction when switching between the displayed digital avatar and the voice-only virtual assistant, the voice-only virtual assistant accepting the same user inputs as the displayed digital avatar, and wherein the device is configured to also switch from the displayed digital avatar to the voice-only virtual assistant if the user minimizes the computer program's window or if the device goes into a lock screen.

## Patentansprüche

1. Computerimplementiertes Verfahren, Folgendes umfassend:
Bestimmen mit Hilfe mindestens eines Sensors (24), ob ein Benutzer (22) auf ein Computerprogrammfenster (26) auf einem Bildschirm (12) eines Geräts (10) schaut oder nicht,
in Reaktion auf das Bestimmen, dass der Benutzer auf das Computerprogrammfenster auf den Bildschirm schaut, Anzeigen eines digitalen Avatars (28), der in der Lage ist, sprachlich, kombiniert mit mindestens einem von Geste und Gesichtsausdruck, mit dem Benutzer zu interagieren, in dem Computerprogrammfenster auf dem Bildschirm, wobei der digitale Avatar ein digitaler Avatar eines virtuellen Assistenten ist, und
in Reaktion auf das Bestimmen, dass der Benutzer nicht auf das Computerprogrammfenster auf dem Bildschirm schaut, Aktivieren eines virtuellen reinen Sprachassistenten (30) des Computerprogramms (20), ohne den digitalen Avatar anzuzeigen, wobei der virtuelle reine Sprachassistent ein Virtueller-reiner-Sprachassistent-Modus des virtuellen Assistenten ist, und wobei der virtuelle reine Sprachassistent (30) in der Lage ist, sprachlich, jedoch ohne Gesten oder Gesichtsausdrücke mit dem Benutzer (22) zu interagieren,
wobei das Verfahren eine flüssige sprachbasierte Benutzerinteraktion beim Umschalten zwischen dem angezeigten digitalen Avatar und dem virtuellen reinen Sprachassistenten ermöglicht, wobei der virtuelle reine Sprachassistent die gleichen Benutzereingaben wie der angezeigte digitale Avatar akzeptiert, und wobei das Verfahren außerdem von dem angezeigten digitalen Avatar auf den virtuellen reinen Sprachassistenten umschaltet, wenn der Benutzer das Computerprogrammfenster minimiert oder wenn das Gerät in einen Sperrbildschirm geht.

2. Computerimplementiertes Verfahren nach Anspruch 1, ferner Folgendes umfassend:
Umschalten von dem angezeigten digitalen Avatar auf den virtuellen reinen Sprachassistent, wenn bestimmt wird, dass der Benutzer von dem Computerprogrammfenster weg schaut.

3. Computerimplementiertes Verfahren nach Anspruch 1 oder 2, ferner Folgendes umfassend:
Umschalten von dem virtuellen reinen Sprachassistenten auf den digitalen Avatar, wenn bestimmt wird, das der Benutzer auf das Computerprogrammfenster schaut.

4. Computerimplementiertes Verfahren nach Anspruch 3, wobei das Umschalten zwischen dem digitalen Avatar und dem virtuellen reinen Sprachassistenten in Reaktion darauf, dass der Benutzer auf das Computerprogrammfenster schaut oder von dem Computerprogrammfenster weg schaut, einer festgelegten Verzögerung unterliegt.

5. Computerimplementiertes Verfahren nach einem der vorhergehenden Ansprüche, wobei der digitale Avatar ein humanoider digitaler Avatar ist.

6. Computerimplementiertes Verfahren nach einem der vorhergehenden Ansprüche, wobei der mindestens eine Sensor eine Frontkamera (24) des Geräts ist.

7. Computerimplementiertes Verfahren nach einem der vorhergehenden Ansprüche, wobei das Gerät aus einer Gruppe ausgewählt wird, die Folgendes umfasst:
ein Mobilgerät, ein Mobiltelefon, ein Smartphone, ein Tablett, einen Computer, eine Smartwatch, ein Smartdisplay, ein Smart-Home-Steuergerät, ein Haushaltsgerät und ein zur Benutzerinteraktion fähiges Gerät in einem Fahrzeug.

8. Computerprogrammprodukt (20), Computerprogrammcode umfassend, um bei Ausführung auf einem Computer (10) das Verfahren nach einem der vorhergehenden Ansprüche durchzuführen.

9. Computerlesbares Speichermedium, das Computerprogrammprodukt nach Anspruch 8 umfassend.

10. Elektrisches Signal, auf einer Trägerwelle umgesetzt und auf einem elektrischen Medium propagiert, wobei das elektrische Signal das Computerprogrammprodukt nach Anspruch 8 umfasst.

11. Gerät (10), mindestens einen Sensor (24) und eine elektronische Anzeige mit einem Bildschirm (12) umfassend, wobei das Gerät für Folgendes konfiguriert ist:
Bestimmen mit Hilfe des mindestens einen Sensors, ob ein Benutzer (22) auf ein Computerprogrammfenster (26) schaut, das auf dem Bildschirm angezeigt wird,
in Reaktion auf das Bestimmen, dass der Benutzer auf das Computerprogrammfenster auf dem Bildschirm schaut, Anzeigen eines digitalen Avatars (28), der in der Lage ist, sprachlich, kombiniert mit mindestens einem von Geste und Gesichtsausdruck mit dem Benutzer zu interagieren, in dem Computerprogrammfenster auf dem Bildschirm, wobei der digitale Avatar ein digitaler Avatar eines virtuellen Assistenten ist, und
in Reaktion auf das Bestimmen, dass der Benutzer nicht auf das Computerprogrammfenster auf dem Bildschirm schaut, Aktivieren eines virtuellen reinen Sprachassistenten (30), ohne den digitalen Avatar anzuzeigen, wobei der virtuelle reine Sprachassistent ein Virtueller-reiner-Sprachassistent-Modus des virtuellen Assistenten ist, und wobei der virtuelle reine Sprachassistent (30) in der Lage ist, sprachlich, jedoch ohne Gesten oder Gesichtsausdrücke mit dem Benutzer (22) zu interagieren.
wobei das Gerät eine flüssige sprachbasierte Benutzerinteraktion beim Umschalten zwischen dem angezeigten digitalen Avatar und dem virtuellen reinen Sprachassistenten ermöglicht, wobei der virtuelle reine Sprachassistent die gleichen Benutzereingaben wie der angezeigte digitale Avatar akzeptiert, und wobei das Gerät dafür gestaltet ist, außerdem von dem angezeigten digitalen Avatar auf den virtuellen reinen Sprachassistenten umzuschalten, wenn der Benutzer das Computerprogrammfenster minimiert oder wenn das Gerät in einen Sperrbildschirm geht.

## Revendications

1. Procédé mis en oeuvre par ordinateur, comprenant de :
déterminer, à l'aide d'au moins un capteur (24), si un utilisateur (22) regarde ou non la fenêtre d'un programme informatique (26) sur un écran (12) d'un dispositif (10) ;
en réponse à la détermination que l'utilisateur regarde la fenêtre du programme informatique sur l'écran, afficher dans la fenêtre du programme informatique sur l'écran un avatar numérique (28) capable d'interagir avec l'utilisateur avec la voix combinée à au moins un geste et une expression faciale, dans lequel l'avatar numérique est un avatar numérique d'un assistant virtuel ; et
en réponse à la détermination que l'utilisateur ne regarde pas la fenêtre du programme informatique sur l'écran, activer un assistant virtuel uniquement vocal (30) du programme informatique (20) sans afficher l'avatar numérique, dans lequel l'assistant virtuel uniquement vocal est un mode d'assistant virtuel uniquement vocal dudit assistant virtuel, et dans lequel l'assistant virtuel uniquement vocal (30) est capable d'interagir avec l'utilisateur (22) avec la voix mais pas avec des gestes ou des expressions faciales,
dans lequel le procédé permet une interaction d'utilisateur basée sur la voix transparente lors de la commutation entre l'avatar numérique affiché et l'assistant virtuel uniquement vocal, l'assistant virtuel uniquement vocal acceptant les mêmes entrées d'utilisateur que l'avatar numérique affiché et dans lequel le procédé passe également de l'avatar numérique affiché à l'assistant virtuel uniquement vocal si l'utilisateur réduit la fenêtre du programme informatique ou si le dispositif passe à un écran de verrouillage.

2. Procédé mis en oeuvre par ordinateur selon la revendication 1, comprenant en outre :
le passage de l'avatar numérique affiché à l'assistant virtuel uniquement vocal lorsqu'il est déterminé que l'utilisateur regarde loin de la fenêtre du programme informatique.

3. Procédé mis en oeuvre par ordinateur selon la revendication 1 ou 2, comprenant en outre :
le passage de l'assistant virtuel uniquement vocal à l'avatar numérique lorsqu'il est déterminé que l'utilisateur regarde la fenêtre du programme informatique.

4. Procédé mis en oeuvre par ordinateur selon la revendication 3, dans lequel le passage entre l'avatar numérique affiché et l'assistant virtuel uniquement vocal en réponse au fait que l'utilisateur regarde la fenêtre du programme informatique ou s'éloigne de la fenêtre du programme informatique est soumis à un retard prédéterminé.

5. Procédé mis en oeuvre par ordinateur selon une quelconque des revendications précédentes, dans lequel l'avatar numérique est un avatar numérique humanoïde.

6. Procédé mis en oeuvre par ordinateur selon une quelconque des revendications précédentes, dans lequel le ou les capteurs sont une caméra frontale (24) du dispositif.

7. Procédé mis en oeuvre par ordinateur selon une quelconque des revendications précédentes, dans lequel ledit dispositif est sélectionné dans un groupe comprenant :
un dispositif mobile, un téléphone mobile, un smartphone, une tablette, un ordinateur, une montre intelligente, un écran intelligent, un dispositif de commande de maison intelligente, un appareil électroménager et un dispositif à interaction d'utilisateur dans un véhicule.

8. Produit de programme informatique (20) comprenant un code de programme informatique pour exécuter, lorsqu'il est exécuté sur un ordinateur (10), le procédé selon une quelconque des revendications précédentes.

9. Support de mémorisation lisible par ordinateur comprenant le produit de programme informatique selon la revendication 8.

10. Signal électrique incorporé sur une onde porteuse et propagé sur un support électrique, le signal électrique comprenant le produit de programme informatique selon la revendication 8.

11. Dispositif (10), comprenant au moins un capteur (24) et un affichage électronique avec un écran (12), dans lequel le dispositif est configuré pour :
déterminer, à l'aide du ou des capteurs, si un utilisateur (22) regarde une fenêtre de programme informatique (26) affichée sur l'écran ;
en réponse à la détermination que l'utilisateur regarde la fenêtre de programme informatique sur l'écran, afficher dans la fenêtre du programme informatique sur l'écran un avatar numérique (28) capable d'interagir avec l'utilisateur avec la voix combinée avec au moins un geste et une expression faciale, dans lequel l'avatar numérique est un avatar numérique d'un assistant virtuel ; et
en réponse à la détermination que l'utilisateur ne regarde pas la fenêtre du programme informatique sur l'écran, activer un assistant virtuel uniquement vocal (30) sans afficher l'avatar numérique, l'assistant virtuel uniquement vocal étant un mode d'assistant virtuel uniquement vocal dudit assistant virtuel, et dans lequel l'assistant virtuel uniquement vocal (30) est capable d'interagir avec l'utilisateur (22) avec la voix mais pas avec des gestes ou des expressions faciales,
dans lequel le dispositif permet une interaction d'utilisateur basée sur la voix transparente lors de la commutation entre l'avatar numérique affiché et l'assistant virtuel uniquement vocal, l'assistant virtuel uniquement vocal acceptant les mêmes entrées d'utilisateur que l'avatar numérique affiché, et dans lequel le dispositif est configuré pour passer aussi de l'avatar numérique affiché à l'assistant virtuel uniquement vocal si l'utilisateur réduit la fenêtre du programme informatique ou si le dispositif passe à un écran de verrouillage.
